**Europäisches Patentamt**

**European Patent Office**

**Office européen des brevets**

(19)

(11) Veröffentlichungsnummer: **0 075 755**
**A2**

(12) # EUROPÄISCHE PATENTANMELDUNG

(21) Anmeldenummer: **82108245.0**

(22) Anmeldetag: **08.09.82**

(51) Int. Cl.³: **C 09 C 1/00**

(30) Priorität: **23.09.81 DE 3137808**

(43) Veröffentlichungstag der Anmeldung:
**06.04.83 Patentblatt 83/14**

(84) Benannte Vertragsstaaten:
**BE DE FR GB IT NL**

(71) Anmelder: **Merck Patent Gesellschaft mit beschränkter Haftung**
**Frankfurter Strasse 250**
**D-6100 Darmstadt(DE)**

(72) Erfinder: **Bernhard, Horst, Dr.**
**Haus Nr. 52**
**A-4164 Schwarzenberg(AT)**

(54) **Perlglanzpigmente mit verbesserter Lichtechtheit, Verfahren zur Herstellung und Verwendung.**

(57) Die Anmeldung betrifft Perlglanzpigmente mit gelber Pulverfarbe und verbesserter Lichtechtheit auf der Basis von mit Titandioxid beschichteten Glimmerschuppen, wobei auf die Titandioxidschicht als zusätzliche färbende Schutzschicht eine dünne Schicht von geglühtem Chromoxid und/oder Chromphosphat aufgebracht ist. Die Pigmente werden hergestellt, indem ein mit Metalloxiden und/oder Hydroxiden beschichtetes Glimmerpigment mit einer dünnen Schicht einer schwer löslichen Chrom (III)-Verbindung beschichtet wird und anschließend bei einer Temperatur von etwa 500 bis etwa 1000° C geglüht wird.

EP 0 075 755 A2

Croydon Printing Company Ltd.

Merck Patent Gesellschaft
mit beschränkter Haftung
6100 Darmstadt


Perlglanzpigmente mit verbesserter Lichtechtheit,
Verfahren zur Herstellung und Verwendung

Die Erfindung betrifft Perlglanzpigmente mit gelber
Pulverfarbe und verbesserter Lichtechtheit auf der
Basis von mit Titandioxid beschichteten Glimmerschuppen, auf die eine zusätzliche färbende Schutzschicht
aufgebracht ist.

Sowohl aus dem deutschen Patent 1467468, als auch aus der
deutschen Offenlegungsschrift 2852585 ist bekannt, daß
eine zusätzliche dünne Chromhydroxidschicht auf mit Titandioxid beschichteten Glimmerplättchen eine Verbesserung der
Lichtstabilität der zugrundeliegenden Pigmente bewirkt.
Während im DBP 1467468 der günstige Einfluß einer Chromhydroxidbeschichtung auf mit $TiO_2$ in Anatasform beschichteten Glimmer beschrieben wird, wird in der DOS 2852585 der
analoge Einfluß auf mit $TiO_2$ in Rutilform beschichteten
Glimmer beschrieben. Beide Patente zielen auf die Gewinnung ungefärbter $TiO_2$-Glimmer-Pigmente.

Auch diese verbesserten Pigmente sind jedoch noch nicht
völlig zufriedenstellend, so daß weiterhin ein Bedürfnis
nach Pigmenten mit verbesserter Lichtechtheit bestand.

Insbesondere besteht ein Bedarf an lichtechten Perlglanzpigmenten mit kräftigem Goldglanz, daneben aber auch generell an Pigmenten mit gelber Pulverfarbe und beliebigen Interferenzfarben.

Es wurde nun gefunden, daß nicht nur durch eine Beschichtung durch Chromhydroxid, sondern auch mit anderen schwer löslichen Chrom(III)-Verbindungen eine Verbesserung der Lichtechtheit von $TiO_2$-haltigen Glimmerpigmenten bewirkt wird und daß insbesondere durch eine weitere Calcinierung der mit einer Chrom(III)-Verbindung beschichteten Pigmente einerseits eine weitere erhebliche Verbesserung der Lichtechtheit bewirkt wird, und daß andererseits durch das beim Glühen entstehende kräftig gelbgefärbte Chromtitanat sehr vorteilhafte Pigmente mit gelber Pulverfarbe entstehen.

Gegenstand der Erfindung sind daher Perlglanzpigmente mit gelber Pulverfarbe und verbesserter Lichtechtheit auf der Basis von mit Titandioxid beschichteten Glimmerschuppen, wobei auf die Titandioxidschicht eine zusätzliche färbende Schutzschicht aufgebracht ist, dadurch gekennzeichnet, daß als Schutzschicht eine dünne Schicht von geglühtem Chromoxid und/oder Chromphosphat aufgebracht ist.

Gegenstand der Erfindung ist auch ein Verfahren zur Herstellung dieser Pigmente und ihre Verwendung.

Obwohl die durch eine Chromhydroxidbeschichtung erzielbare Verbesserung der Lichtbeständigkeit von Glimmer/$TiO_2$-Pigmenten seit etwa 20 Jahren bekannt ist, wurde bisher eine nachträgliche Calcinierung der mit Chrom(III) beschichteten Pigmente nicht in Betracht gezogen. Überraschenderweise werden jedoch gerade durch diese nachträgliche Calcinierung besonders vorteilhafte Pigmente gewonnen, die durch ihre Lichtechtheit ebenso bestechen wie durch ihre gelbe Pulverfarbe. Insbesondere bei Präparaten mit gelber Interferenzfarbe werden brillant glänzende Goldpigmente erhalten.

Zur Herstellung der erfindungsgemäßen Pigmente werden zunächst Glimmerplättchen auf übliche Weise mit $TiO_2$ und gegebenenfalls auch anderen Metalloxiden beschichtet. Bei diesen als Basispigmente verwendeten Glimmerschuppenpigmenten handelt es sich in der Regel um Glimmerschuppen mit einem Durchmesser von etwa 5 - 200 µm und einer Dicke von etwa 0,1 - 5 µm, die mit einer Metalloxidschicht überzogen sind. Als Metalloxidüberzüge werden wegen des vorteilhaften Brechungsindex hauptsächlich Titandioxid bzw. Titandioxidaquate und/oder Zirkondioxid bzw. Zirkondioxidaquate verwendet. Zusammen mit diesen Metalloxiden können jedoch auch andere farblose oder gegebenenfalls auch farbige Metalloxide wie z. B. $SnO_2$, $Al_2O_3$ oder $Fe_2O_3$ verwendet werden. Ein besonders häufig eingesetztes Pigment ist z. B. ein Glimmerschuppenpigment, bei dem Glimmerschuppen mit einem Durchmesser von etwa 5 - 50 µm und einer Dicke von etwa 0,5 µm gleichmäßig mit einer ggf. hydratisierten Titandioxidschicht beschichtet sind, wobei die Glimmeroberfläche eine $TiO_2$-Schicht von etwa 50 - 500 mg $TiO_2$ pro $m^2$ trägt. Diese Perlglanzpigmente besitzen je nach der Schichtdicke der aufgefällten Metalloxidschicht verschiedene Interferenzfarben. Alle diese Pigmente sind bekannt und z. B. in den deutschen Patenten und Patentanmeldungen Nr. 1467468, 1959998, 2009566, 2060850, 2106613, 2214545, 2215191 und 2522572 beschrieben. Besonders bevorzugt sind Pigmente mit gelber Interferenzfarbe. Die Nachbehandlung mit Chromverbindungen führt in diesen Fällen zu brillanten Goldpigmenten, die sich durch den klaren Farbton von den bisher bekannten eisenoxidhaltigen rötlichen Goldpigmenten äußerst vorteilhaft abheben.

GSPHA5 R-ad

- 3a -

In der Regel handelt es sich bei den Basispigmenten um Produkte, die bei höheren Temperaturen von etwa 600 - 1000 °C calciniert sind. Es wurde jedoch gefunden, daß auch dann sehr gute Ergebnisse erzielt werden, wenn die Chrom(III)-Schicht direkt nach der Beschichtung des Glimmers mit den anderen Metalloxiden erfolgt und dann erst geglüht wird. Mit diesem einfacheren, nur ein einmaliges Glühen erfordernden Verfahren werden Pigmente erhalten, die sich vorteilhaft von denen des Standes der Technik unterscheiden, jedoch in der Regel nicht ganz die Qualität der zweimalig, also nach der Metalloxidbeschichtung und nach der Beschichtung mit Chrom(III), geglühten Pigmente erreichen. Trotzdem sind die nach diesem einstufig durchführbaren Verfahren hergestellten und daher preiswerten Pigmente für bestimmte Anwendungen vollauf ausreichend und daher für diese Anwendungen bevorzugt. Entscheidend ist in jedem Fall, daß das Pigment nach der Beschichtung mit der Chrom(III)-Verbindung geglüht wird.

Besonders bevorzugte Basispigmente sind die aus der deutschen Offenlegungsschrift 2522572 bekannten Rutil/Glimmer-Pigmente, die einen Schichtenaufbau aufweisen, wobei auf die Glimmeroberfläche zunächst eine dünne $TiO_2$-Schicht und danach alternierend zumindest die Folge $SnO_2/TiO_2$ aufgefällt ist und die danach bei einer Temperatur bis etwa 1000 °C geglüht sind. Diese Präparate können jedoch ebenso wie andere Basispigmente, auch uncalciniert eingesetzt werden. Die Rutilstruktur entsteht dann beim Glühen der mit der schwerlöslichen Chromverbindung beschichteten Produkte.

Zum Aufbringen der Chrom(III)-haltigen Schicht wird das Basispigment, das die erwünschte Interferenzfarbe aufweist, in wässeriger Lösung suspendiert und mit Chromhydroxid und/

GSPHA5 R-ad

oder Chromphosphat beschichtet. Die Bedingungen für die Beschichtung können in weiten Bereichen variiert werden. Erwünscht ist lediglich, daß die in der Suspension durch chemische Reaktion, Hydrolyse oder Reduktion gebildete schwerlösliche Chrom(III)-Verbindung pro Zeiteinheit nur in solcher Menge entsteht, daß sie laufend auf der Pigmentoberfläche abgelagert werden kann, ohne daß es zur Bildung von wesentlichen Mengen von freien Fällungsteilchen in der Suspension kommt.

Die Bildung der schwerlöslichen Chrom(III)-Verbindung kann sowohl aus Chrom(III)-Salzen als auch ausgehend von Chrom(VI)-Verbindungen erfolgen. Ausgehend von Chrom(III)-Salzen kann entweder die Pigmentsuspension die zur Fällung notwendigen Ionen (Hydroxyl- und/oder Phosphationen) enthalten, wobei man eine Chrom(III)-Salzlösung langsam zulaufen läßt, oder es kann eine Chrom(III)-Salz-haltige Pigmentsuspension langsam mit Hydroxyl- und/oder Phosphationen versetzt werden. Es kann jedoch auch der Pigmentsuspension gleichzeitig sowohl eine Chromsalzlösung als auch eine die fällenden Ionen enthaltende Lösung zugefügt werden, wobei in der Regel ein konstanter pH-Wert aufrechterhalten wird, oder es können in der chromsalzhaltigen Pigmentsuspension durch chemische Reaktion, wie z. B. homogene Hydrolyse, die zur Fällung notwendigen Ionen gebildet werden.

Chrom(III)-Ionen können jedoch auch in situ aus Chrom(VI)-Verbindungen gebildet werden. Dazu wird eine Chrom(VI)-Salzlösung in der Pigmentsuspension mit einem Reduktionsmittel wie z. B. Hydrazin oder Hydroxylamin gemischt, wobei entweder eine Komponente vorgelegt und die andere zugegeben wird oder beide Komponenten gleichzeitig langsam der Pigmentsuspension zugegeben werden.

Der pH-Wert in der Pigmentsuspension sollte oberhalb von etwa 3 liegen, wobei Werte von zwischen 4,5 und 9 bevorzugt werden. Zur Einstellung des pH-Wertes, der bei alleiniger Zugabe der sauren Chrom(III)-Salzlösung im stark sauren Bereich liegen würde, kann an sich jede Base verwendet werden. Beispielhaft werden genannt: Ammoniak (in Lösung oder gasförmig), Natronlauge oder Kalilauge. Bevorzugt wird Ammoniak verwendet.

Zur Lieferung von Chrom(III)-Ionen kann an sich jedes lösliche Chrom(III)-Salz oder Chromat(VI) verwendet werden. Bevorzugt werden $CrCl_3$- oder Chromalaunlösungen bzw. Kaliumdichromat verwendet. Falls eine Phosphatfällung erfolgen soll, können sowohl Orthophosphorsäure als auch ihre primären, sekundären und tertiären Salze sowie polymere Phosphate eingesetzt werden. Geeignet sind neben Phosphorsäure z. B. $KH_2PO_4$, $Na_2HPO_4$ x 12 $H_2O$, $Na_3PO_4$ x 12 $H_2O$, $Na_4P_2O_7$ x 7 $H_2O$ und $(NaPO_3)_x$.

Die Fällung kann an sich bei jeder Temperatur zwischen Gefrier- und Siedepunkt der Aufschlämmung vorgenommen werden. Es hat sich jedoch gezeigt, daß bei relativ tiefen Temperaturen Nebenfällungen auftreten können. Es wird deshalb bevorzugt bei erhöhter Temperatur, z. B. etwa 50 - 100 $^{\circ}C$, insbesondere etwa 50 - 90 $^{\circ}C$ gearbeitet. Jedoch werden auch bei anderen Temperaturen in der Regel qualitativ gute Fällungen erreicht.

Es ist nicht notwendig, daß ein reiner Chromhydroxid- oder Chromphosphatniederschlag auf den Pigmentteilchen gebildet wird. Es können sowohl Mischungen von Chromhydroxid und Chromphosphat untereinander als auch Mischungen mit anderen, vorzugsweise farblosen Metalloxiden aufgebracht werden, die entweder gleichzeitig mit der Chromverbindung oder in dünner Schicht vorher oder nachher aufgebracht werden.

Ferner ist es möglich, die gebildeten Niederschläge durch anschließende Reaktionen in ihrer chemischen Zusammensetzung zu verändern. So kann z. B. ein Chromhydroxidniederschlag durch Behandeln der damit beschichteten Pigmentteilchen mit phosphathaltigen Lösungen teilweise oder vollständig in Chromphosphat umgewandelt werden, ohne daß die Beschichtung an Wirksamkeit verliert.

Zum Erreichen der erfindungsgemäßen Verbesserung der Lichtechtheit genügen relativ geringe Mengen der Chromverbindung. Schon bei einem Gehalt von 0,5 Gew.% (berechnet als $Cr_2O_3$ und bezogen auf das Gesamtpigment) ist der volle Stabilisierungseffekt nachweisbar. Mit zunehmendem Gehalt an Chrom tritt dann nach dem Glühen noch eine verstärkte Farbsättigung des erzeugten Goldtones ein, was zu sehr schönen Effekten genutzt werden kann. Bei einem Chromgehalt oberhalb von etwa 4 Gew.% kann nicht das gesamte Chrom mit Titandioxid zu dem gelben Chromtitanat umgesetzt werden, sondern es verbleibt z. B. als Chromoxid, was sich durch einen Grünton in der Pulverfarbe der Pigmente bemerkbar macht. Dies kann zwar zu speziellen Effekten genutzt werden, ist jedoch im Rahmen der vorliegenden Erfindung, bei der eine Verbesserung der Lichtechtheit bei gleichzeitiger Gewinnung von Pigmenten mit gelber Pulverfarbe, insbesondere von brillanten Goldpigmenten, angestrebt wird, in der Regel nicht erwünscht. Die erfindungsgemäßen Pigmente haben daher vorzugsweise einen Gehalt von etwa o,2 - 3 Gew.% der Chromverbindung, berechnet als $Cr_2O_3$.

Nach der Beschichtung der Basispigmente mit Chromhydroxid und/oder Chromphosphat werden die Pigmente auf übliche Weise weiterbearbeitet. In der Regel werden sie dazu abfiltriert, gewaschen und getrocknet. Im Gegensatz zu der bekannten Nachbehandlung durch Beschichten mit Chromhydroxid folgt dann jedoch noch eine Calcinierung bei Temperaturen von etwa 500 bis etwa 1000 °C, vorzugsweise etwa 700 bis etwa 900 °C. Bei dieser Calcinierung, die üblicherweise für etwa eine halbe bis eine Stunde erfolgt, wird ggf. vorhandenes Chromhydroxid und andere Hydroxide und Aquate entwässert und durch Reaktion mit dem $TiO_2$ entsteht die brillant gelbe Pigmentfarbe.

Die so erhaltenen Pigmente besitzen neben dem ansprechenden Goldton gegenüber den nach dem Stand der Technik hergestellten, nicht geglühten Pigmenten eine deutlich verbesserte Lichtechtheit, so daß durch die Erfindung wertvolle neue Pigmente gewonnen werden. Die erfindungsgemäßen Pigmente können wie die bisher bekannten verwendet werden, also z. B. als Zusatz zu Kunststoffen, Farben oder Lacken, aber insbesondere auch in Körperpflegemitteln und Kosmetika. Durch die verbesserte Lichtechtheit sind auch alle Anwendungen bevorzugt, bei denen die Pigmente Umwelteinflüssen ausgesetzt sind, insbesondere z. B. in Autolacken.

Beispiel 1

120 g eines nach dem Verfahren der DOS 2522572 mit alternierenden Schichten von $TiO_2/SnO_2/TiO_2/SnO_2/TiO_2$ belegtes und danach bei 900 °C geglühtes Glimmerpigment mit gelber Interferenzfarbe (Plättchengröße 10 bis 60 µm, Glimmergehalt 50,8 %, $TiO_2$-Gehalt 42,2 %, $SnO_2$-Gehalt 7,0 %) werden in 2,4 l Wasser aufgeschlämmt und auf 75° C erwärmt. Die Suspension wird mit 5 %iger Ammoniaklösung auf pH 6,0 eingestellt und innerhalb von 15 Minuten mit einer Lösung von 0,8 g $KCr(SO_4)_2 \cdot 12 H_2O$ in 30 ml Wasser versetzt, wobei der pH-Wert durch gleichzeitige Zugabe von 5 %iger Ammoniaklösung konstant gehalten wird. Danach wird noch 30 Minuten bei 75° C gerührt, abfiltriert, gewaschen, getrocknet und 30 Minuten bei 800° C geglüht. Man erhält ein gelb gefärbtes Pigment mit goldener Glanzfarbe und einem Chromgehalt, berechnet als $Cr_2O_3$, von 0,1 %.

In analoger Weise wird das gleiche Basispigment mit solchen Mengen Chromhydroxid beschichtet, daß sich nach dem Glühen ein $Cr_2O_3$-Gehalt von 0,5, 1,0, 4,0 und 8 % ergibt. Bei einem Bewitterungstest, bei dem die in PVC eingearbeiteten Pigmente hoher Feuchtigkeit und UV-Licht ausgesetzt werden, zeigt es sich, daß bereits die mit 0,1 % $Cr_2O_3$ beschichteten Pigmente eine weniger starke Verfärbung als die Basispigmente aufweisen und daß schon bei einem $Cr_2O_3$-Gehalt von 0,5 % kaum noch eine Verfärbung nachgewiesen werden kann. Gleichzeitig wird deutlich, daß die Produkte mit einem $Cr_2O_3$-Gehalt ab 4 % bereits einen deutlichen Grünton aufweisen.

Beispiel 2

Eine Suspension von 120 g des Basispigments aus Beispiel 1 in 2,4 l Wasser wird auf 75° C erhitzt, mit 5 %iger Ammoniaklösung auf pH 6,2 eingestellt und langsam mit einer Lösung von 4,0 g $KCr(SO_4)$ . 12 $H_2O$ in 50 ml Wasser versetzt, wobei der pH-Wert durch gleichzeitige Zugabe von 5 %igem Ammoniak konstant gehalten wird. Nach 30minütigem Nachrühren wird die Hälfte der Suspension abfiltriert, gewaschen, getrocknet und 30 Minuten bei 840° C geglüht. Die zweite Hälfte der Suspension wird mit einer Lösung von 1,5 g $Na_2HPO_4$ . 12 $H_2O$ in 100 ml Wasser versetzt und nach 30 Minuten abfiltriert, gewaschen, getrocknet und 30 Minuten bei 840° C geglüht. Beide Präparate zeigen einen lebhaften Goldglanz und enthalten etwa 0,5 % $Cr_2O_3$.

Im Lichtechtheitstest kann ein Unterschied zwischen den beiden Präparaten nicht festgestellt werden, beide Präparate erweisen sich jedoch als deutlich lichtechter als unbehandelte Präparate.

Beispiel 3

Nach dem Verfahren der DOS 25 22 572 wird Kaliglimmer mit einer Plättchengröße von 5 bis 200 µm bei 75 °C und einem pH-Wert von 1 bis 2,5 zunächst mit einer $TiO_2$-Schicht von 5 nm Dicke, dann mit einer $SnO_2$-Schicht von 5 - 10 nm Dicke, einer $TiO_2$-Schicht von 45 - 55 nm, erneut einer $SnO_2$-Schicht von etwa 5 nm und anschließend mit $TiO_2$ bis zum Erreichen einer gelben Interferenzfarbe beschichtet. Danach wird der pH-Wert auf etwa 6 eingestellt und gleichzeitig sowohl eine Chrom(III)-Chloridlösung als auch eine Ammoniaklösung langsam zugegeben, wodurch der pH-Wert weitgehend konstant bei 6 gehalten wird. Nach Auffällen einer Chromhydroxidschicht, die etwa 0,1 Gew.% Chromoxid, bezogen auf das Gesamtpigment, entspricht, wird das Pigment abfiltriert, gewaschen, getrocknet und für 0,5 Stunden bei 800° C geglüht.

In analoger Weise wird das gleiche Basispigment mit solchen Mengen Chromhydroxid beschichtet, daß sich nach dem Glühen ein $Cr_2O_3$-Gehalt von 0,5, 1,0, 4,0 und 8 % ergibt. Bei einem Bewitterungstest, bei dem die in PVC eingearbeiteten Pigmente hoher Feuchtigkeit und UV-Licht ausgestzt werden, zeigt es sich, daß bereits die mit 0,1 % $Cr_2O_3$ beschichteten Pigmente eine weniger starke Verfärbung als die Basispigmente aufweisen, und daß schon bei einem $Cr_2O_3$-Gehalt von 0,5 % kaum noch eine Verfärbung nachgewiesen werden kann. Gleichzeitig wird deutlich, daß die Produkte mit einem $Cr_2O_3$-Gehalt ab 4 % bereits einen deutlichen Grünton aufweisen.

Vergleichbare Ergebnisse werden erzielt, wenn anstatt mit $Cr(OH)_3$ mit $CrPO_4$ beschichtet und dann geglüht wird.

Beispiel 4

45 g Kaliglimmer der Plättchengröße 10 - 60 μm werden in Wasser suspendiert und nach dem Verfahren der DOS 25 22 572 mit alternierenden Schichten von $TiO_2$/ $SnO_2$/$TiO_2$ bis zum Erreichen einer silbernen Interferenzfarbe belegt. Danach wird die Suspension mit 10 %iger Natronlauge auf pH 6,0 eingestellt und langsam mit einer Lösung von 0,44 g $KCr(SO_4)_2$ . 12 $H_2O$ in 30 ml Wasser versetzt, wobei durch gleichzeitige Gabe von 5 %iger Ammoniaklösung der pH-Wert konstant gehalten wird. Danach wird abfiltriert, gewaschen, getrocknet und 30 Minuten bei 820 °C geglüht. Man erhält ein silbrig glänzendes Pigment mit gelblicher Pulverfarbe und sehr guter Lichtechtheit, das 0,2 % $Cr_2O_3$ enthält.

Beispiel 5

45 g Kaliglimmer der Plättchengröße 10 - 60 μm werden in 1,5 l Wasser suspendiert und entsprechend Verfahren der DOS 25 22 572 bis zum Erreichen einer grünen Interferenzfarbe beschichtet. Danach wird die Suspension mit 10 %iger Natronlauge auf pH 6,0 eingestellt und langsam mit einer Lösung von 1,8 g $KCr(SO_4)_2$ . 12 $H_2O$ in 100 ml Wasser verssetzt, wobei der pH-Wert durch Zudosieren einer 5 %igen Ammoniaklösung konstant gehalten wird. Danach wird das Pigment abfiltriert, gewaschen, getrocknet und 30 Minuten bei 800 °C geglüht. Men erhält ein Pigment mit gelber Pulverfarbe und grünlich-gelber Interferenzfarbe mit einem $Cr_2O_3$-Gehalt von 0,3 %.

Beispiel 6

45 g Kaliglimmer der Teilchengröße 10 bis 60 µm werden in 1,6 l Wasser suspendiert und entsprechend dem Verfahren der DOS 25 22 572 bis zum Erreichen einer roten Interferenzfarbe beschichtet. Danach wird die Suspension auf pH 5,8 eingestellt und mit einer Lösung von 1,04 g $KCr(SO_4)_2$ . 12 $H_2O$ in 60 ml Wasser versetzt, wobei der pH-Wert durch Zugabe von 5 %iger Ammoniaklösung konstant gehalten wird. Danach wird abfiltriert, gewaschen, getrocknet und 30 Minuten bei 800° C geglüht. Man erhält ein rotglänzendes Pigment mit gelber Pulverfarbe, das hohe Lichtechtheit besitzt und 0,2 % $Cr_2O_3$ enthält.

Merck Patent Gesellschaft
mit beschränkter Haftung
6100 Darmstadt


Patentansprüche


1.  Perlglanzpigmente mit gelber Pulverfarbe und verbesserter Lichtechtheit auf der Basis von mit
    Titandioxid beschichteten Glimmerschuppen, wobei auf
    die Titandioxidschicht eine zusätzliche färbende
    Schutzschicht aufgebracht ist, dadurch gekennzeichnet,
    daß als Schutzschicht eine dünne Schicht von geglühtem
    Chromoxid und/oder Chromphosphat aufgebracht ist.


2.  Perlglanzpigmente nach Anspruch 1, dadurch gekennzeichnet, daß der Chromgehalt der Schutzschicht, be-
    rechnet als $Cr_2O_3$, etwa 0,2 - 3 Gew.%, bezogen auf das
    Gesamtgewicht des Pigments, beträgt.


3.  Verfahren zur Herstellung von Perlglanzpigmenten mit
    verbesserter Lichtechtheit auf der Basis von mit
    Metalloxiden beschichteten Glimmerteilchen, dadurch
    gekennzeichnet, daß ein mit Metalloxiden und/oder
    Hydroxiden beschichtetes Glimmerpigment mit einer
    dünnen Schicht einer schwer löslichen Chrom(III)-
    Verbindung beschichtet wird und anschließend bei
    einer Temperatur von etwa 500 bis etwa 1000 °C
    geglüht wird.


PHA5 R-ad

4.  Verfahren nach Anspruch 3, dadurch gekennzeichnet, daß die schwerlösliche Chrom(III)-Verbindung in einer Menge aufgebracht wird, die nach dem Glühen einen Chromgehalt, berechnet als $Cr_2O_3$, von etwa 0,2 bis etwa 3 Gew.%, bezogen auf das Gesamtgewicht des Pigments, ergibt.

5.  Verfahren nach Anspruch 3 oder 4, dadurch gekennzeichnet, daß als schwerlösliche Chrom(III)-Verbindung Chromhydroxid und/oder Chromphosphat verwendet wird.

6.  Verfahren nach einem der Ansprüche 3 bis 5, dadurch gekennzeichnet, daß als Ausgangsmaterial ein calciniertes Rutilpigment oder ein uncalciniertes Pigment, dessen Titananteil beim Glühen in Rutil übergeht, verwendet wird.

7.  Verwendung der Pigmente nach Anspruch 1 zur Pigmentierung von Lacken, Farben und Körperpflegemitteln.

GSPHA5 R-ad